# EUROPEAN PATENT APPLICATION

(11) **EP 2 472 750 A1**
(43) Date of publication of application: **04.07.2012**
(21) Application number: 10197335.2
(22) Date of filing: 30.12.2010
(51) Int. Cl.: H04B 10/20, G02B 6/26, G02B 6/28

(54) **OPTICAL NETWORK SYSTEM AND METHOD**

(71) Applicant: Nokia Siemens Networks Oy, 02610 Espoo (FI)
(72) Inventor: Rohde, Harald, 81673, München (DE); Smolorz, Sylvia, 81379, München (DE)

(57) **Abstract**

A method for an optical network system and an optical network system comprising a first optical network unit a second optical network unit including a receiver and a transmitter, wherein the first optical network unit is coupled with the receiver and the transmitter via an asymmetric optical coupling device.

## Description

### FIELD OF THE INVENTION

The invention refers to method and an apparatus for signal processing in a communication system (e.g. an optical communication system).

### BACKGROUND OF THE INVENTION

This section is intended to provide a background or context to the invention that is recited in the claims. The description herein may include concepts that could be pursued, but are not necessarily ones that have been previously conceived or pursued. Therefore, unless otherwise indicated herein, what is described in this section is not prior art to the description and claims in this application and is not admitted to be prior art by inclusion in this section.

A passive optical network (PON) is a promising approach regarding fiber-to-the-home (FTTH), fiber-to-the-business (FTTB) and fiber-to-the-curb (FTTC) scenarios, in particular as it overcomes the economic limitations of traditional point-to-point solutions.

The PON has been standardized and it is currently being deployed by network service providers worldwide. Conventional PONs distribute downstream traffic from the optical line terminal (OLT) to optical network units (ONUs) in a broadcast manner while the ONUs send upstream data packets multiplexed in time to the OLT. Hence, communication among the ONUs needs to be conveyed through the OLT involving electronic processing such as buffering and/or scheduling, which results in latency and degrades the throughput of the network.

In fiber-optic communications, wavelength-division multiplexing (WDM) is a technology which multiplexes multiple optical carrier signals on a single optical fiber by using different wavelengths (colors) of laser light to carry different signals. This allows for a multiplication in capacity, in addition to enabling bidirectional communications over one strand of fiber.

WDM systems are divided into different wavelength patterns, conventional or coarse and dense WDM. WDM systems provide, e.g., up to 16 channels in the 3rd transmission window (C-band) of silica fibers around 1550 nm. Dense WDM uses the same transmission window but with denser channel spacing. Channel plans vary, but a typical system may use 40 channels at 100 GHz spacing or 80 channels with 50 GHz spacing. Some technologies are capable of 25 GHz spacing. Amplification options enable the extension of the usable wavelengths to the L-band, more or less doubling these numbers.

Optical access networks, e.g., a coherent Ultra-Dense Wavelength Division Multiplex (UDWDM) network, are deemed to be the future data access technology.

The problem to be solved is the separation of the incoming downstream light from the outgoing upstream optical signals which both are transmitted by the same optical fiber. Particularly critical is the case of single fiber networking elements of optical networks where the upstream and downstream wavelengths are so closely interleaved in frequency that they cannot be separated by normal color filters. An example for such network elements are NGOA (Next generation optical access) ONUs.

Conventional solutions of the stated problem include the employment of an optical circulator. In other optical access systems such as GPON, EPON or XG-PON the downstream light and the upstream light are spectrally separated by more than 100 nm in their wavelength and so cheap color filters can be used for the separation of the up- and downstream

However, the above-mentioned conventional solutions are very expensive and do not provide a high sensitivity for an ONU.

The problem to be solved is to overcome the disadvantages stated above and in particular to provide a system which separates the incoming downstream light from the outgoing upstream optical signals, when both are transmitted by the same optical fiber, in a cost effective way and with a high sensitivity.

### SUMMARY OF THE INVENTION

In order to overcome the above-described need in the art, the present invention discloses an optical network system comprising a first optical network unit, a second optical network unit including a receiver and a transmitter, wherein the first optical network unit is coupled with the receiver of the second optical network units and the transmitter of the second optical network unit via an asymmetric optical coupling device.

In a next embodiment of the invention, the asymmetric optical coupling device is formed to have a grater coupling efficiency for coupling downstream light from the first optical network unit into the receiver of the second optical network unit than for coupling upstream light from the transmitter of the second optical network unit into the first optical network unit.

It is also an embodiment, that the asymmetric optical coupling device is configured so that the downstream light from the first optical network unit into the second optical network unit is attenuated by substantially less than 30% and the upstream light from the second optical network unit into the first optical network unit is attenuated by substantially more than 70%.

In a further embodiment, the first optical network unit is coupled with the asymmetric optical coupling device via a first optical link.

In a next embodiment, the first optical link is an optical fiber configured to transmit a downstream optical signal from the first optical network unit to the asymmetric optical coupling device and an upstream optical signal from the asymmetric optical coupling device to the first optical network unit.

It is also an embodiment, that the asymmetric optical coupling device is formed so that the downstream optical signal is attenuated by substantially equal or less than 1dB and the upstream optical signal is attenuated by substantially equal or more than 6.8 dB.

In a further embodiment, the second optical network unit is coupled with the asymmetric optical coupling device via a second and a third optical link.

In a next embodiment, the second optical link is an optical fiber configured to transmit the downstream optical signal from the asymmetric optical coupling device to the receiver of the second optical network unit.

It is also an embodiment, that the third optical link is an optical fiber configured to transmit the upstream optical signal from the transmitter of the second optical network unit to the asymmetric optical coupling device.

In a further embodiment, the second optical link and the third optical link are realized as a waveguide in an integrated photonic component.

In a next embodiment, the asymmetric optical coupling device is coupled with an optical beam dumping unit via a fourth optical link.

In a further embodiment, the asymmetric optical coupling device is coupled with a photodiode via a fourth optical link.

In a next embodiment, that the receiver is configured to receive the downstream optical signal and the transmitter is configured to transmit the upstream optical signal.

In a further embodiment, the asymmetric optical coupling device is an asymmetric power splitter or an asymmetric beam splitter.

In a next embodiment, the asymmetric power splitter is a 2-way power splitter, having two inputs and two outputs.

The problem stated above is also solved by a method for an optical network system, comprising: providing a first optical network unit, providing a second optical network unit including a receiver and a transmitter, coupling the first optical network unit with the receiver with the transmitter via an asymmetric optical coupling device.

The method, the apparatus and the system provided, in particular, bears the following advantages:
a) They provide a system which separates the incoming downstream light from the outgoing upstream optical signals, when both are transmitted by the same optical fiber, in a cost effective way
b) They delivering a higher sensitivity for an ONU.
c) They are easy to implement.

### BRIEF DESCRIPTION OF THE DRAWINGS

The invention is explained by way of example in more detail below with the aid of the attached drawings.

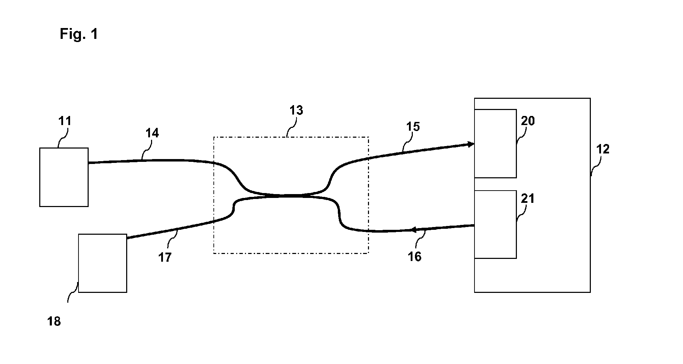

**Fig. 1** is a schematic representation of two optical network units coupled with respect to each other via an asymmetric optical coupling device 13, according to one embodiment of the invention.

### DESCRIPTION OF THE INVENTION

Illustrative embodiments will now be described with reference to the accompanying drawings to disclose the teachings of the present invention. While the present invention is described herein with reference to illustrative embodiments for particular applications, it should be understood that the invention is not limited thereto. Those having ordinary skill in the art and access to the teachings provided herein will recognize additional modifications, applications, and embodiments within the scope thereof and additional fields in which the present invention would be of significant utility.

**Fig. 1** is a schematic representation of two optical network units coupled with respect to each other via an asymmetric optical coupling device 13, according to one embodiment of the invention.

In particular, Fig 1 shows a first optical network unit 11, a second optical network unit 12 including a receiver 20 and a transmitter 21, wherein the first optical network unit 11 is coupled with the receiver 20 of the second optical network units 12 and the transmitter 21 of the second optical network unit 12 via an asymmetric optical coupling device 13, which can be, for example, an asymmetric beam splitter.

Conventionally, with a symmetric power splitter, the downstream light is attenuated by 3 dB. This value is too high and reduces the sensitivity of the ONU. The upstream light undergoes the same amount of 3 dB attenuation.

According to one embodiment of the invention, the power splitter is made asymmetric such that e.g. the downstream light is only attenuated by 1 dB. In this configuration, the downstream sensitivity is not influenced, compared to a circulator (which has an insertion loss of at least 1 dB, more realistically 2 dB). The less insertion loss is given to the downstream, the higher will be the upstream insertion loss. The table below lists downstream insertion losses and the respective upstream losses, both in logarithmic ("dB") and linear scale.

| Insertion Loss Rx (dB) (downstream) | Insertion Loss Tx (dB) (upstream) | Insertion Loss Rx (linear) | Insertion Loss Rx (linear) |
|---|---|---|---|
| 0.5 | 9.6 | 11% | 89% |
| 1 | 6.8 | 20% | 80% |
| 1.5 | 5.3 | 29% | 71% |
| 2 | 4.3 | 37% | 63% |
| 2.5 | 3.6 | 44% | 56% |
| 3 | 3 | 50% | 50% |

According to one embodiment of the invention, the upstream light is strongly attenuated in order to allow for more downstream light to pass through the ONU. This is acceptable as it will be cheaper to increase the power of the upstream transmitter to compensate for the additional loss than to include an optical circulator, especially as the circulator is an optical element which is extremely difficult to integrate in optical integrated circuits, as needed for price effective ONUs.

In a multimode interference (MMI) 2x2 coupler, which is a typical device which is implemented in planar waveguide technology, the power distribution between the output ports is determined by the relative propagation delay between the modes. If, for example, the coupler is designed to support the fundamental mode (0 mode) and the first order mode (1 mode), their propagation speeds will differ, leading to a phase delay between the two modes which varies periodically during propagation through the coupler.

Since the 0 mode has even spatial symmetry, it will have equal amplitude at both output ports. The 1 mode, however, has odd symmetry, so that its electric field has opposing signs at the two output ports. Since the total field is a linear superposition of the two modes, it is possible to have complete extinction at one or the other output port, an even distribution of power between the ports, or any intermediate weighting of the power.

How the two modes add, and therefore, the power distribution between the ports, is determined by the phase difference between the modes in the output plane. This phase difference depends on the difference in propagation speed of the modes and the length of the coupler. Both of these parameters can be determined by the physical dimensions of the planar waveguide coupler, which are defined in a standard lithographic wafer process. Adjustments are also possible by applying a small current to a resistive heater which has been evaporated onto the coupler, thus creating a coupler with a configurable asymmetric split.

As every power splitter has, by fundamental physical law, two inputs and two outputs, care has to be taken to avoid back reflections from the open power splitter end. So the unused power splitter end either can be realized as an optical beam dump (trivial to produce in an integrated optical circuit) or to connect a photodiode which can be used for necessary monitoring functions.

Depending on the characteristics of the local oscillator laser in the ONU, an optical isolator might be necessary to avoid optical injection locking to the downstream wavelength, even though the downstream wavelength is offset by 1 GHz from the local oscillator laser wavelength. But even in this case, the combination of an optical isolator and an asymmetric power splitter is probably cheaper than the comparable solution with a circulator and can give additionally one dB more sensitivity.

The present invention is not limited to the details of the above described principles. The scope of the invention is defined by the appended claims and all changes and modifications as fall within the equivalents of the scope of the claims are therefore to be embraced by the invention. Mathematical conversions or equivalent calculations of the signal values based on the inventive method or the use of analogue signals instead of digital values are also incorporated.

### List of Abbreviations:

- EPON: Ethernet Passive Optical Network
- GPON: Gigabit capable Passive Optical Network
- NGOA: Next Generation Optical Access
- ONU: Optical Network Unit
- UDWDM: ultra-dense WDM
- WDM: wavelength division multiplex
- XG-PON: 10-Gigabit Passive Optical Network

## Claims

1. An optical network system comprising
a first optical network unit (11);
a second optical network unit (12) including a receiver (20) and a transmitter (21);
**characterized in that**:
the first optical network unit (11) being coupled with the receiver (20) of the second optical network units (12) and the transmitter (21) of the second optical network unit (12) via an asymmetric optical coupling device (13).

2. An optical network system according to claim 1, wherein the asymmetric optical coupling device (13) is formed to have a grater coupling efficiency for coupling downstream light from the first optical network unit (11) into the receiver (20) of the second optical network unit (12) than for coupling upstream light from the transmitter (21) of the second optical network unit (12) into the first optical network unit (11).

3. An optical network system according to claim 2, wherein the asymmetric optical coupling device (13) is configured so that the downstream light from the first optical network unit (11) into the second optical network unit (12) is attenuated by substantially less than 30% and the upstream light from the second optical network unit (12) into the first optical network unit (11) is attenuated by substantially more than 70%.

4. An optical network system according to any of the preceding claims, further comprising:
the first optical network unit (11) being coupled with the asymmetric optical coupling device (13) via a first optical link (14).

5. An optical network system according to claim 4, further comprising:
the first optical link (14) being an optical fiber configured to transmit a downstream optical signal from the first optical network unit (11) to the asymmetric optical coupling device (13) and an upstream optical signal from the asymmetric optical coupling device (13) to the first optical network unit (11).

6. An optical network system according to claim 5, further comprising:
the asymmetric optical coupling device (13) being formed so that the downstream optical signal is attenuated by substantially equal or less than 1dB and the upstream optical signal is attenuated by substantially equal or more than 6.8 dB.

7. An optical network system according to any of the preceding claims, further comprising:
the second optical network unit (12) being coupled with the asymmetric optical coupling device (13) via a second (15) and a third optical link (16).

8. An optical network system according to claim 7, further comprising:
the second optical link (15) being an optical fiber configured to transmit the downstream optical signal from the asymmetric optical coupling device (13) to the receiver (20) of the second optical network unit (12).

9. An optical network system according to claim 7, further comprising:
the third optical link (16) being an optical fiber configured to transmit the upstream optical signal from the transmitter (21) of the second optical network unit (12) to the asymmetric optical coupling device (13).

10. An optical network system according to any of the claims 7 to 9, further comprising:
wherein the second optical link (15) and the third optical link (16) are realized as a waveguide in an integrated photonic component.

11. An optical network system according to any of the preceding claims, wherein the asymmetric optical coupling device (13) is coupled with an optical beam dumping unit (18) via a fourth optical link (17).

12. An optical network system according to any of the preceding claims 1 to 10, wherein the asymmetric optical coupling device (13) is coupled with a photodiode (18) via a fourth optical link (17).

13. An optical network system according to any of the preceding claims, wherein the receiver (20) is configured to receive the downstream optical signal and the transmitter (21) is configured to transmit the upstream optical signal.

14. An optical network system according to any of the preceding claims 1 to 12, wherein the asymmetric optical coupling device (13) is an asymmetric power splitter or an asymmetric beam splitter.

15. A method for an optical network system, comprising:
providing a first optical network unit (11);
providing a second optical network unit (12) including a receiver (20) and a transmitter (21);
**characterized in that**:
coupling the first optical network unit (11) with the receiver (20) with the transmitter (21) via an asymmetric optical coupling device (13).
